(19) Europäisches Patentamt
European Patent Office
Office européen des brevets

(11) EP 0 504 178 B1

(12) EUROPEAN PATENT SPECIFICATION

(45) Date of publication and mention of the grant of the patent: **27.03.1996 Bulletin 1996/13**

(21) Application number: **90917585.3**

(22) Date of filing: **26.11.1990**

(51) Int Cl.[6]: **G01F 1/74**, G01F 11/02, F04B 13/00, F04B 19/06

(86) International application number: **PCT/GB90/01829**

(87) International publication number: **WO 91/08445 (13.06.1991 Gazette 1991/13)**

(54) **FLOWMETERING APPARATUS**

DURCHFLUSSMESSER

APPAREIL DE DEBITMETRE

(84) Designated Contracting States: **AT BE CH DE DK ES FR GB GR IT LI LU NL SE**

(30) Priority: **27.11.1989 GB 8926767**

(43) Date of publication of application: **23.09.1992 Bulletin 1992/39**

(73) Proprietor: **FRAMO DEVELOPMENTS (U.K.) LIMITED**
**London SW20 OAY (GB)**

(72) Inventor: **MOHN, Frank**
**London SW20 0AY (GB)**

(74) Representative: **Jones, Ian**
**W.P. THOMPSON & CO.**
**Celcon House**
**289-293 High Holborn**
**London WC1V 7HU (GB)**

(56) References cited:
**EP-A- 0 226 908**
**US-A- 4 255 088**
**US-A- 4 705 459**
**US-A- 4 820 129**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 504 178 B1

Printed by Jouve, 75001 PARIS (FR)

## Description

The invention relates to fluid flowmetering and in particular to a method of and an apparatus for metering the flow of multi-phase fluids and the gas and liquid fractions they contain.

There is known from US-A-4 255 088 a liquid pumping system capable of detecting gas in the pump in which the liquid is moved by a piston and in which information is computed from measurements of the liquid pressure and the piston position. Also, in EP-A-0 226 908, information about operation of a displacement pump is obtained from measurement of pumping pressure and sensing of the position of the displacement member. In addition, in US 4 705 459, a positive displacement pump system is described in which the so-called "real delivery rate" is deduced from measurements of the volumetric efficiency of the pump (by position and timing sensors) and from counting the cycling rate of the pump.

The present invention however provides a multiphase fluid flowmeter apparatus as claimed in claim 1.

The present invention also provides a method of measuring the flow of a multiphase fluid as claimed in claim 5.

It will be understood that when a piston pump is pumping a liquid in a pump chamber, the volume being pumped is substantially the volume swept by the piston, because of the near incompressibility of the liquid, but where the incoming fluid includes a substantial gas component, the discharge valve from the pump chamber will not open until the valve opening pressure is reached by compression of the gaseous phase by the piston. As the pressure within the pump chamber is related in known way to its volume proportion of the gaseous phase present in the fluid can be decided from change in volume which the piston has to effect to build up to the valve-opening pressure.

In the absence of the gaseous phase, minimal piston movement will be required, and the required movement will be required, and the required movement will increase with an increased gaseous fraction. Thus knowledge of piston position at the time of discharge provides a measure of the volumetric proportions of liquid and gas in the incoming multiphase fluid.

The positive displacement member is typically a piston reciprocably movable within a cylinder. The first sensor then conveniently comprises a linear variable displacement transducer, or a transducer responsive to a rotary drive taken from the piston movement.

The second sensor can comprise a transducer responsive to the condition of a check valve controlling outflow of the fluid from a chamber in which the fluid is compressed, or a pressure sensor responsive to pressure within such a chamber.

Advantageously, a sensor is included to provide an output dependent on the temperature of the compressed fluid to the computing means.

This apparatus makes it possible to obtain information about fluid pressure within the pump chamber at any desired number of piston positions during the compression stroke, so that with a mixed phase fluid being pumped, the variation of fluid pressure during the stroke can be accurately monitored, as can the amount of gas transferred to the liquid phase.

Although of general applicability, the invention has particular utility in the handling of crude oil, which normally comprises variable mixture of oil and gas. The flowmetering apparatus of the invention can be readily integrated with subsea pumping installations, the chamber being the pump chamber of the pump installation. The invention then makes it possible to assess the volume of crude oil and its constituents extracted at the installation so that the contribution of that particular pumping installation to a common flow to the surface can be measured. Pump performance, and the quantity and constituents of the yield of a particular undersea well, can thus be monitored.

The invention is further described below, by way of example, with reference to the accompanying drawings, in which:

Figure 1 schematically shows a flowmeter apparatus embodying the invention;
Figure 2 diagrammatically displays how the pressure within a metering chamber of the apparatus of Figure 1 varies with chamber volume during the cycle of movement of a piston within it;
Figure 3 schematically illustrates a piston and cylinder of the apparatus of Figure 1; and
Figure 4 is a block circuit diagram illustrating suitable control arrangements for the apparatus of Figure 1, functioning also as an operational pump.

The apparatus schematically shown in Figure 1 comprises a cylinder 2 communicating through ports in an end wall 4 with inlet and discharge pipes 5 and 6 containing respective non-return valves 7 and 9. A piston 10 is guided in the cylinder 2 for axial reciprocation, so that a variable volume metering chamber 12 is defined between it and the non-return valves 7 and 9. The non-return valves 7 and 9 are orientated so that outward movement of the piston 10 away from the end wall 4, draws fluid into the chamber 12 through the valve 7 and inward movement expels the fluid along the pipe 6 through the valve 9.

The apparatus can usefully function as an operational pumping apparatus and reciprocation of the piston 7 is preferably effected by a linear electric motor 20 comprising drive members 21, each in the form of a winding shaped as a flat rectangular plate, and a reaction member 22 received between them, constituted by a strongly magnetized permanent magnet also shaped as a flat rectangular plate. Energization of the drive members 12 causes movement of the reaction member 22 along its length. The reaction member 22 is connected to the piston 10 by a piston rod 24, and the piston assembly comprising the piston, the piston rod, and the reaction member is guided so that a major surface of the reaction member moves parallel to major surfaces of the drive members 21 with only a minimum spacing therebetween.

For metering the flow of fluid through the apparatus, the piston assembly is connected to a transducer 25 providing a signal dependent on the position of the piston 10 within the cylinder 2. As illustrated in the lower part of Figure 1, the piston assembly transducer 25 can comprise a linear variable displacement transformer, of which one end is connected to the piston rod 24 and the other is secured to the cylinder to extend parallel to the piston rod. Alternatively, the position transducer can be a transducer 30 response to a rotary drive input which is taken to the transducer by way of a pinion 31 driven by a rack 32 secured to the piston rod 24 for reciprocation with the piston assembly, as shown in the upper part of Figure 1.

The apparatus additionally includes a transducer 35 operatively associated with the discharge non-return valve 9 so as to provide an output indicating the condition of this valve. Additionally there is provided a pressure transducer 36 providing an output dependent on the pressure within the chamber 12.

The outputs of the transducers are supplied to circuitry 37 in which they are processed to provide metering output signals which are supplied to display and/or recording equipment 39. The basis on which the transducer outputs are treated to obtain the desired output is described below with reference to Figures 2 and 3, of which the former illustrates the relationship between the pressure within the metering chamber 12 and its volume during a complete cycle of piston movement.

The lower portion of the PV diagram of Figure 2, line 40, illustrates the condition of the chamber 12 during the inlet or suction stroke of the piston 10, after the inlet valve 7 has opened under low pressure induced in the chamber by the movement of the piston. The pressure within the chamber 12, governed by the opening pressure of the valve 7, remains substantially constant until the piston 10 reaches the end of its suction stroke and reverses direction, as indicated at point 41, to begin the compression or discharge stroke to thereby build up pressure within the chamber. If the fluid in the chamber 12 were wholly without any substantial gas admixture, the pressure would increase substantially immediately, as shown by broken line 42, to a level at which the discharge valve 9 opens, the chamber conditions then being as shown at point 44. Because of the small compressibility of liquid, there would be a small reduction in volume before the discharge valve 9 opens, as indicated by the slope of the line 42. Thereafter, pressure within the chamber 12 would remain substantially constant during the discharge stroke of the piston 10 until at point 45 the next suction stroke begins.

The relationship between pressure and chamber volume is quite different when the fluid is a mixed phase fluid, because of the relatively ready compressibility of the gaseous phase. As shown by the solid line 46, at the end of the suction stroke and the beginning of the discharge stroke, the pressure within the pumping chamber does not rise to the discharge pressure almost instantaneously, but relatively slowly, as the gas is compressed. Once the gas phase has been compressed to the pressure at which the valve 9 opens, at point 49, the pressure remains constant as the piston movement continues through the discharge stroke. The position of point 49 thus depends on the volume of gas that has to be compressed to reach the valve opening pressure.

Similarly, after the end of the discharge stroke, as the suction stroke begins, the presence of a lesser volume of gas in the chamber 12 at its smallest volume than at the beginning of the discharge stroke causes the pressure to decrease relatively rapidly with increasing chamber volume, as indicated by line 50, until the inlet valve pressure is reached, at point 51, after which the pressure remains substantially constant during the remainder of the suction stroke.

The position of the piston 10 at the time the valve 9 opens can be measured by the transducer 25 and/or 30 and it can be shown that the volume of liquid ($V_{liquid}$) in the fluid in the chamber is given by:

$$V_{liquid} = \frac{\left(\frac{P_1}{P_2}\right)^{1/n} \times V_1 - V_2}{\left(\frac{P_1}{P_2}\right)^{1/n} - 1}$$

where:

- $P_1$ is the known initial pressure in the chamber 12 as the discharge stroke begins
- $P_2$ is the pressure in the chamber at which the valve 9 opens, corresponding to the known valve-opening pressure, or the pressure as determined by the pressure transducer 36.
- $V_1$ is the total fluid volume in the chamber as the discharge stroke begins, and
- $V_2$ is the total volume in the chamber 12 when the valve 9 opens, or at another known pressure in the chamber measured by the pressure transducer 35, the volume being measured by the position transducer 25 or 30.

The polytropic exponent n is given by the equation:

$$n = \frac{\left(\frac{P_2}{P_1}\right)}{\ln\left(\frac{V_{1\ gas}}{V_{2\ gas}}\right)}$$

where:

$V_{1\ gas}$ is the amount of gas in the total volume $V_1$
$V_{2\ gas}$ is the amount of gas in the total volume $V_2$

The polytropic exponent n, which is a function of the gas composition and the gas/liquid ratio, cannot be found directly from the second equation because the gas volumes at conditions 1 and 2 are unknown. Experiments can be performed to determine the relationship between n and the gas/liquid ratio. The equation for $V_{liquid}$ can then be solved by iteration. Below 90% gas, the compression probably will be isothermal (n = 1) since the liquid will transfer heat to the gas.

This calculation ignores the compressibility of the liquid phase in the incoming fluid and could be refined to take this into account. Temperature can be obtained indirectly from the PV relationship in the calculation of the polytropic exponent n, but if it is desired to convert to gas at standard conditions, the temperature has to be measured, as by a temperature sensor 55 which supplies an output signal to the circuitry 37.

The transducer 35 indicates only a single pressure value within the chamber 12, but the output of the transducer 36 can be used instead, or additionally to provide equivalent information about portions only of the entire compressive stroke of the piston, which can be combined to produce an improved display at the equipment 39. Thus, as shown in Figure 3, readings can be obtained from the transducers 25 or 30 and 36 in respect of successive compressive stroke portions of which the first runs from the beginning of the stroke, indicated by "O" at which the piston 10 is shown in unbroken line, to the piston position indicated by "1" and the second runs from position "1" to the illustrated position "2".

It also becomes possible to determine how much gas is tranferred to the liquid phase during the compression stroke. The difference between the amounts of liquid as calculated at two spaced piston positions will be the gas transfer to the liquid. Referring again to Fig. 3, the amount of transfer to liquid between positions "1" and "2" is given by:

$$\Delta V = Vl_2 - Vl_1$$

$$1 \rightarrow 2$$

By use of this method over the whole compression stroke, a relationship is obtained between masstransfer and time during the whole compression operation. It is, however, probable that much of this transfer will take place in the discharge pipe 5, after the fluid has left the pump chamber, because the mixture has not had time to reach equilibrium during the compression stroke.

The illustrated flowmeter apparatus can be integrated with pumping apparatus suitable for use at a subsea station, and a suitable control system for the apparatus is shown in Figure 4. Electrical power is supplied from an alternating current source 60 to the linear motor 20 through a variable speed drive device 61 which may be a cyclo converter for example. The outputs of the position transducer 25 (or 30), and of a sensor 64 responsive to the current actually flowing in the drive member or members, are applied to a control device 65, together with signals dependent on the selected pump frequency and pumping force from respective input devices 66 and 67. The control device 65 provides control signals for the variable speed device 61 so that this supplies power to the linear motor of appropriate frequency and voltage to effect desired control of the piston 12.

The flowmetering facility of the present invention is applicable to piston pumps generally and for subsea use in particular to the kind of pump units described in EP 89 302 229.3 (EP-A-0 332 378).

The invention can of course be embodied in a variety of ways other than as specifically described.

## Claims

**1.** Apparatus providing a measurement of the volumetric proportions of liquid and gas in a multiphase fluid, said apparatus comprising:

a chamber (12),
a positive displacement member (10) movable within said chamber (12),
means for admission of a multiphase fluid into said chamber,
a check valve (9) adapted to open to permit outflow of the fluid from said chamber (12) in response to a predetermined pressure therewithin;
means for moving said positive displacement member (10) to compress the multiphase fluid in said chamber (12),
first sensor means (25;30) providing a signal dependent on the position of the positive displacement member,
second sensor means (35,36) arranged to continuously measure the pressure in said chamber for any position of the positive displacement member and comprising a transducer (35) providing a signal when the check valve opens (9), and
computing means response to the signals from the first and second sensor means and adapted to process the signals to provide a measurement of the volumetric proportions of liquid and gas in the multiphase fluid flowing through the apparatus.

**2.** A flowmeter apparatus as claimed in claim 1, including a sensor (55) providing an output dependent on the temperature of the compressed fluid to the computing means (37).

**3.** A flowmeter apparatus as claimed in any preceding claim wherein the positive displacement member

(10) is part of an operational pump for the multiphase fluid, the pump being controlled by control means (65) responsive to the output of the first transducer (25;30).

**4.** A flowmeter apparatus as claimed in claim 3 wherein the positive displacement member is a piston (10) reciprocably driven by a linear electric motor (20) and the control means (65) is responsive additionally to at least one of signals dependent on the current flowing in the motor, a selected pump frequency and a selected pumping force.

**5.** A method of measuring the flow of a multiphase fluid comprising the steps of moving the fluid through apparatus in which it is compressed by a positive displacement member, and continuously measuring the pressure of the compressed fluid during the compressive movement of the member and the position of the positive displacement member, and sensing when an output check valve of the apparatus opens, and using this measurement and sensing information to calculate the volumetric proportions of liquid and gas in the multiphase fluid.

## Patentansprüche

**1.** Vorrichtung, die eine Messung der volumetrischen Anteile von Flüssigkeit und Gas in einem mehrphasigen Fluid vorsieht, wobei die genannte Vorrichtung folgendes umfaßt:

eine Kammer (12),
ein in der genannten Kammer (12) bewegliches Verdrängerelement (10),
Mittel zum Einlassen eines mehrphasigen Fluids in die genannte Kammer,
ein Absperrventil (9), das zum Öffnen ausgeführt ist, um das Ausfließen des Fluids aus der genannten Kammer (12) auf einen vorbestimmten Druck darinnen zuzulassen,
Mittel zum Bewegen des genannten Verdrängerelements (10) zum Verdichten des mehrphasigen Fluids in der genannten Kammer (12),
erstes Sensormittel (25, 30), das ein von der Position des Verdrängerelements abhängiges Signal vorsieht,
zweites Sensormittel (35, 36), das zum kontinuierlichen Messen des Drucks in der genannten Kammer für jede beliebige Position des Verdrängerelements angeordnet ist und einen Transducer (35) aufweist, der ein Signal liefert, wenn sich das Absperrventil (9) öffnet, und
Rechenmittelreaktion auf die Signale vom ersten und zweiten Sensormittel, und zur Verarbeitung der Signale zum Vorsehen einer Messung der volumetrischen Anteile von Flüssigkeit und Gas in dem durch die Vorrichtung fließenden mehrphasigen Fluid ausgeführt ist.

**2.** Durchflußmesservorrichtung nach Anspruch 1, die einen Sensor (55) aufweist, der eine von der Temperatur des verdichteten Fluids abhängige Ausgabe zum Rechenmittel (37) vorsieht.

**3.** Durchflußmesservorrichtung nach einem der vorangehenden Ansprüche, wobei das Verdrängerelement (10) Teil einer Arbeitspumpe für das mehrphasige Fluid ist, wobei die Pumpe von einem auf die Ausgabe des ersten Transducers (25, 30) ansprechenden Steuermittel (65) gesteuert wird.

**4.** Durchflußmesservorrichtung nach Anspruch 3, wobei das Verdrängerelement ein von einem elektrischen Linearmotor (20) reziprok angetriebener Kolben (10) ist und das Steuermittel (65) zusätzlich auf mindestens eines von Signalen anspricht, die von dem im Motor fließenden Strom, einer ausgewählten Pumpfrequenz und einer ausgewählten Pumpkraft abhängig sind.

**5.** Verfahren zum Messen des Flusses eines mehrphasigen Fluids umfassend die folgenden Schritte: Bewegen des Fluids durch eine Vorrichtung, in der es von einem Verdrängerelement verdichtet wird, und kontinuierliches Messen des Drucks des verdichteten Fluids während der Verdichtungsbewegung des Elements und der Position des Verdrängerelements und Abtasten, wann sich ein Auslaß-Absperrventil der Vorrichtung öffnet, und Benutzen dieser Meß- und Abtastinformationen, um die volumetrischen Proportionen von Flüssigkeit und Gas im mehrphasigen Fluid zu berechnen.

## Revendications

**1.** Appareil permettant de mesurer les proportions volumétriques de liquide et de gaz dans un fluide polyphasé, cet appareil comportant:

une chambre (12),
un élément à déplacement positif (10) qui peut se déplacer à l'intérieur de la chambre (12),
des moyens d'admission d'un fluide polyphasé dans la chambre,
un clapet de retenue (9) adapté de manière à s'ouvrir pour permettre l'écoulement du fluide à partir de la chambre (12) lorsqu'une pression prédéterminée existe à l'intérieur de cette chambre,
des moyens d'entraînement de l'élément à déplacement positif (10) en vue de comprimer le fluide polyphasé dans la chambre (12);
un premier capteur (25; 30) produisant un signal

fonction de la position de l'élément à déplacement positif,
un deuxième capteur (35; 36), prévu de manière à mesurer continuellement la pression dans la chambre pour n'importe quelle position de l'élément à déplacement positif, et comportant un transducteur (35) qui produit un signal lors de l'ouverture du clapet de retenue (9), et aussi
des moyens de calcul réagissant aux signaux envoyés par les premier et deuxième capteurs et adaptés pour traiter les signaux en vue d'assurer la mesure des proportions volumétriques de liquide et de gaz dans le fluide polyphasé qui s'écoule à travers l'appareil.

**2.** Débitmètre, selon la revendication 1, comportant un capteur (55) qui fournit aux moyens de calcul (37) un signal de sortie fonction de la température du liquide comprimé.

**3.** Débitmètre, selon l'une quelconque des revendications précédentes, dans lequel l'élément à déplacement positif (10) fait partie d'une pompe opérationnelle pour le fluide polyphasé, la pompe étant contrôlée par des moyens de commande (65) qui réagissent au signal de sortie du premier transducteur (25; 30).

**4.** Débitmètre, selon la revendication 3, dans lequel l'élément à déplacement positif est un piston (10) entraîné en mouvement altematif par un moteur électrique linéaire (20), et dans lequel les moyens de commande (65) réagissent également à au moins l'un des signaux fonction du courant qui circule dans le moteur, d'une fréquence sélectionnée de la pompe et d'une force de pompage sélectionnée.

**5.** Méthode de mesure du débit d'un fluide polyphasé comportant les étapes qui consistent à faire s'écouler le fluide à travers un appareil dans lequel il est comprimé par un élément à déplacement positif, et à mesurer continuellement la pression du fluide comprimé pendant la course de compression de l'élément ainsi que la position de l'élément à déplacement positif, et aussi à détecter le moment d'ouverture d'un clapet de retenue côté refoulement de l'appareil et utiliser cette mesure et cette information détectée pour calculer les proportions volumétriques de liquide et de gaz dans le fluide polyphasé.

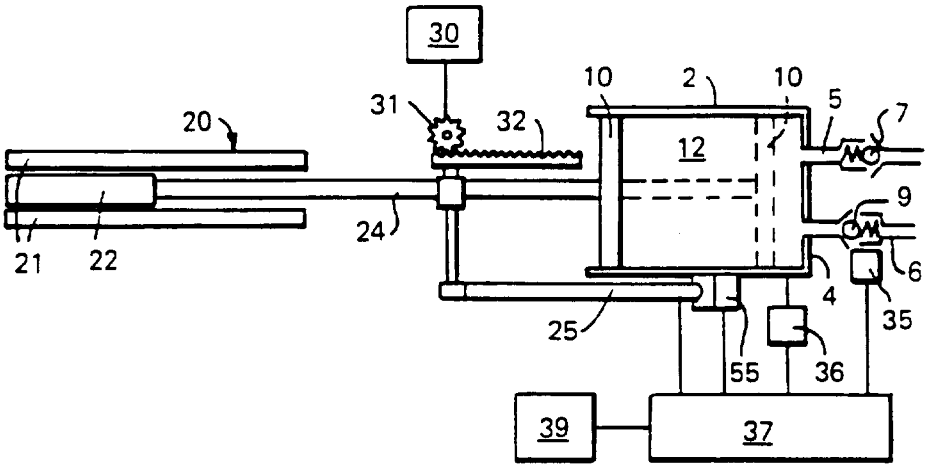
30
31
32
20
10
2
10
5
7
12
9
6
24
21
22
25
4
35
55
36
39
37

FIG. 1

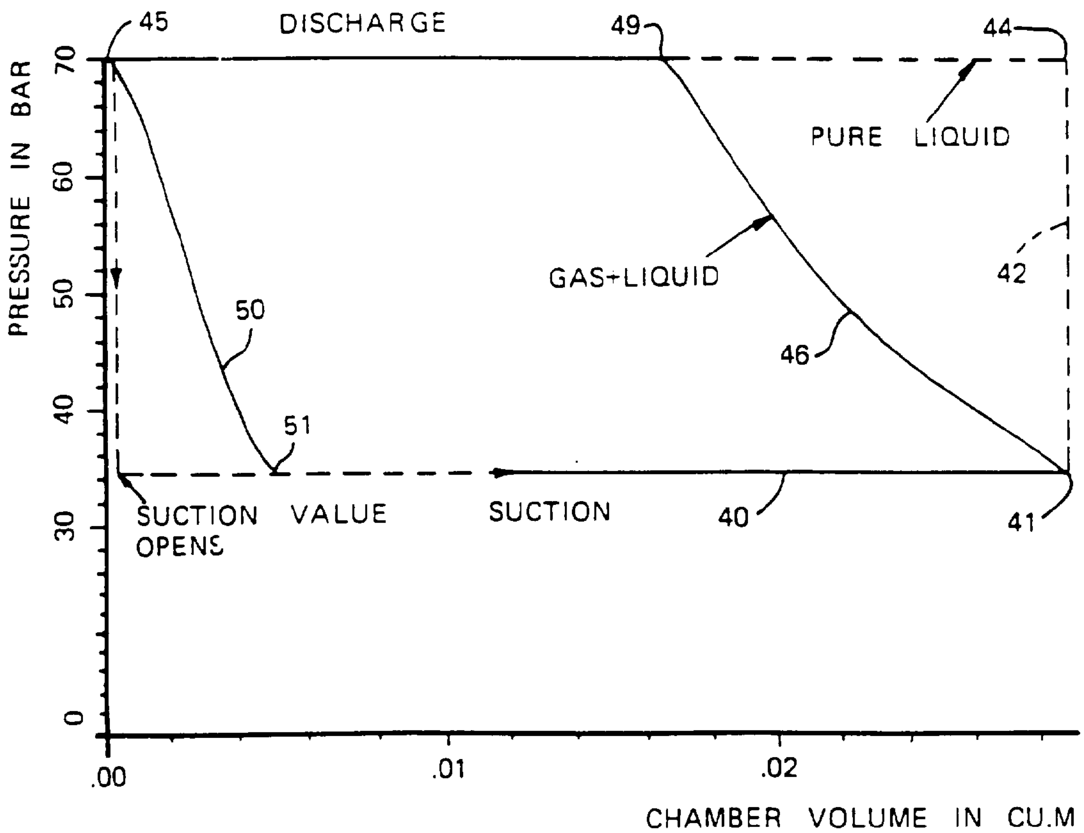
45
DISCHARGE
49
44
PURE LIQUID
GAS+LIQUID
42
50
46
51
SUCTION VALUE OPENS
SUCTION
40
41
PRESSURE IN BAR
70
60
50
40
30
0
.00
.01
.02
CHAMBER VOLUME IN CU.M

FIG. 2

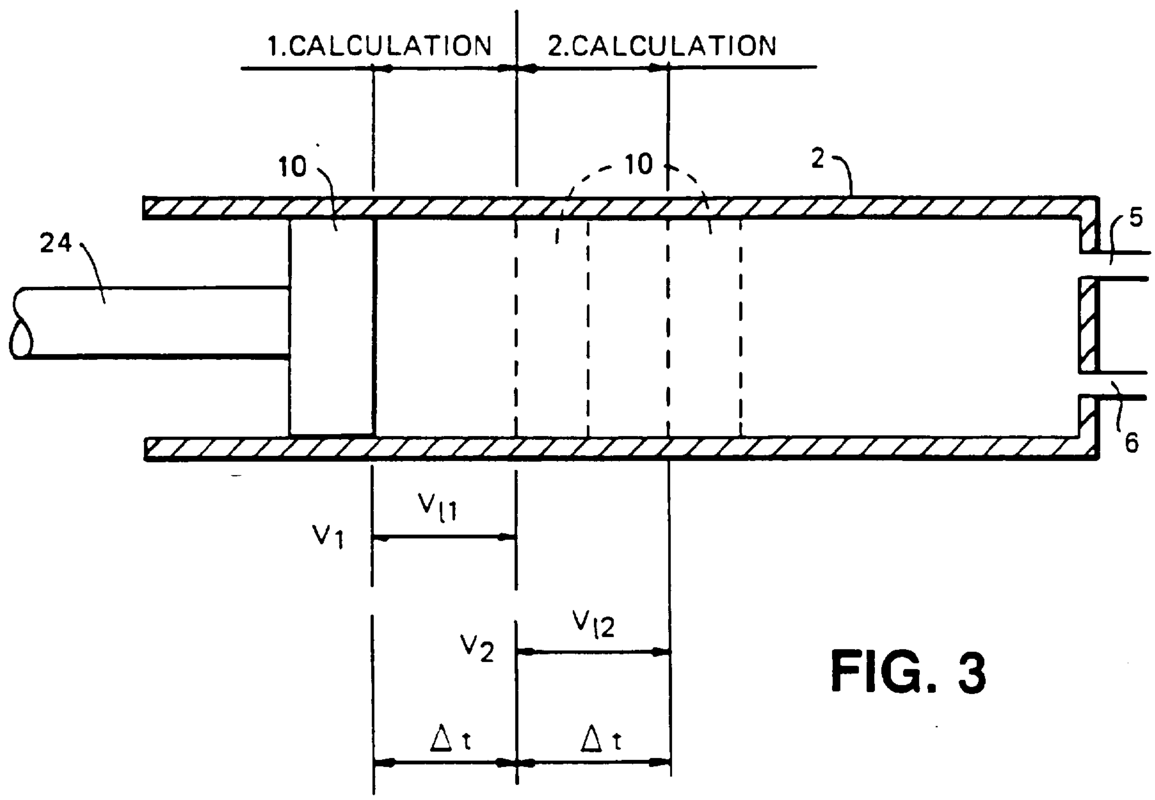
1.CALCULATION
2.CALCULATION
10
10
2
24
5
6
$V_1$
$V_{l1}$
$V_2$
$V_{l2}$
$\Delta t$
$\Delta t$

FIG. 3

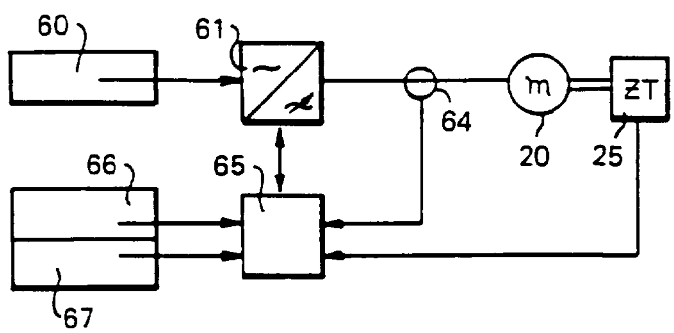
60
61
64
20
25
66
65
67
ZT

FIG. 4